# EUROPEAN PATENT APPLICATION

(11) **EP 3 757 383 A1**
(43) Date of publication of application: **30.12.2020**
(21) Application number: 19380012.5
(22) Date of filing: 26.06.2019
(51) Int. Cl.: F03D 1/06, F03D 80/30

(54) **ELECTRICAL CONNECTION SYSTEM FOR A WIND TURBINE BLADE, WIND TURBINE AND RELATED METHOD**

(71) Applicant: SIEMENS GAMESA RENEWABLE ENERGY INNOVATION & TECHNOLOGY, S.L., 31621 Sarriguren (Navarra) (ES)
(72) Inventor: García Ayerra, Fernando, 31007 Pamplona (Navarra) (ES); Guerrero, Olimpio, Artica (ES); Guilera, Joan Pau, 31621 Sarriguren (ES); Victor, March Nomen, 08194 Les Fonts (ES)
(74) Representative: Aspacher, Karl-Georg

(57) **Abstract**

The present invention relates to an electrical connection system for a wind turbine blade that allows sharing the current between all conductors, in order to avoid voltage differences between them, avoiding internal sparks between pultruded plates, preferably in a spar cap of the wind turbine blade. A second object of the invention is a wind turbine which in turn comprises the wind turbine blade comprising the electrical bonding system. A third object of the invention is a method for electrically connecting conductive caps in a wind turbine blade.

## Description

### OBJECT OF THE INVENTION

The present invention relates to an electrical connection system for a wind turbine blade that allows sharing the current between all conductors, in order to avoid voltage differences between them, avoiding internal sparks between pultruded plates, preferably in a spar cap of the wind turbine blade.

A second object of the invention is a wind turbine which in turn comprises the wind turbine blade comprising the electrical bonding system.

A third object of the invention is a method for electrically connecting conductive elements which are part of a cap in a wind turbine blade.

### BACKGROUND OF THE INVENTION

It is known in the state of the art document US20180156202A1 that discloses a spar cap assembly for a wind turbine rotor blade with a carbon fiber-reinforced spar cap, a lightning conductor, which extends along the spar cap, and an equipotential bonding element, which connects the spar cap and the lightning conductor together electrically conductively, wherein the spar cap includes a plurality of layers of pultruded semi-finished products and the equipotential bonding element comprises a sheet of a carbon fiber material, which rests against an end face of an end on the blade root side of one of the pultruded semi-finished products and against an end face of an end on the blade tip side of one of the pultruded semi-finished products.

However, the plurality of layers of pultruded semi-finished products are not good conductors compared to metals. Their linear conductivity being three orders of magnitude lower than copper, promotes a high voltage difference because of Ohm's law during flow of lightning currents. This voltage difference between conductors can create electrical discharges between these conductors of pultruded semi-finished products of the same spar cap assembly.

Also, carbon cap assemblies comprise multiple pultruded semi-finished products of different length due to structural reasons. Besides, pultruded semi-finished products are made of a given thickness, being the same or different from all of them.

Lightning current when injected to the spar cap it is shared by all the conductors and needs to be shared every time a pultruded semi-finished product is added at the top. This is, every time the total cross-section of the spar cap is modified. Bigger cross-sections occur for sections at the mid-span region of then blade while smaller cross-sections occur for sections at an end region corresponding to the tip of the blade. Thus, current flowing through the spar is the same (the total Amperes), but not the current density (Amperes/mm2) which depends on the specific radius. It creates flows of current "upwards" (i.e., to the pultruded semi-finished product added at the top), as the current is injected and collected at the ends of the spar cap, this leading to internal sparks between the pultruded semi-finished products.

The applicant doesn't know any electrical connection system for a wind turbine blade which solves the above mentioned drawbacks.

The electrical connection system for a wind turbine blade and the related method of the present invention solve the above cited drawbacks providing an electrical connection system for a wind turbine blade which prevents voltage differences between carbon laminates that make up and provides a homogeneous current distribution along discrete cross-sections.

### DESCRIPTION OF THE INVENTION

The present invention relates to an electrical connection system for a wind turbine blade that allows sharing the current between all conductors, in order to avoid voltage differences between them, avoiding internal sparks between pultruded plates, preferably in a spar cap of the wind turbine blade.

The electrical connection system for a wind turbine blade comprises:
- a spar cap assembly which in turn comprises:
   ∘ at least one set of carbon pultruded plates comprising at least, a first pultruded plate, a second pultruded plate and a third pultruded plate, the second pultruded plate being disposed above the first pultruded plate and the third pultruded plate being disposed above the second pultruded plate, wherein each one of the first, the second and the third pultruded plates comprises at least one electrically conductive region, wherein the first, the second and the third pultruded plates define a longitudinal direction of the wind turbine blade;
   ∘ at least one first inter-plate conductive sheet disposed between the first pultruded plate and the second pultruded plate;at least one second inter-plate conductive sheet disposed between the second pultruded plate and the third pultruded plate;
wherein the third pultruded plate is partially disposed above the second pultruded plate and comprises at least one end followed by an end area in the longitudinal direction of the wind turbine blade; and
wherein the at least one first inter-plate conductive sheet and the at least one second inter-plate conductive sheet are disposed in contact with the at least one electrically conductive region of the first pultruded plate and the second pultruded plate respectively, in areas corresponding, in a first transversal direction of the wind turbine blade being perpendicular to the longitudinal direction, to the end area of the third pultruded plate.

Optionally, the spar cap assembly further comprises at least one additional inter-plate conductive sheet at least partially disposed above the third pultruded plate, wherein the at least one additional inter-plate conductive sheet is disposed in contact with the at least one electrically conductive region of the third pultruded plate in the end area of the third pultruded plate.

Preferably, the pultruded plates comprise a central peel ply region and two distal regions adjacent to the central peel ply region, wherein the two distal regions are electrically conductive regions in the sense of the at least one electrically conductive region as defined above.

Also preferably, the pultruded plates comprise a central peel ply region and two distal regions adjacent to the central peel ply region, wherein the central peel ply region and the two distal regions are electrically conductive regions in the sense of the at least one electrically conductive region as defined above since the central peel ply region has been previously sanded to remove the resin attached during the pultrusion manufacturing process, i.e., configuring a sanded central peel ply region.

Preferably, the at least one first inter-plate conductive sheet and the at least one second inter-plate conductive sheet are disposed at least partially between the first pultruded plate and the second pultruded plate, and the second pultruded plate and the third pultruded plate, respectively, along a second transversal direction of the wind turbine blade being perpendicular to the longitudinal direction.

This solution prevents voltage differences between carbon pultruded plates and provides a homogeneous current distribution along discrete cross-sections.

Optionally, the at least one additional inter-plate conductive sheet is also at least partially disposed above any of the first pultruded plate, the second pultruded plate or both of them.

The electrical connection system for a wind turbine blade so constituted allows sharing the current between all conductors, in order to avoid voltage differences between them, avoiding internal sparks between pultruded plates.
The invention also relates to a method for electrically connecting conductive caps in a wind turbine blade which comprises:
- a step of disposing, at least, a second pultruded plate above a first pultruded plate and a third pultruded plate above the second pultruded plate, wherein the first, the second and the third pultruded plates define a longitudinal direction of the wind turbine blade;
- a step of disposing at least one first inter-plate conductive sheet between the first pultruded plate and the second pultruded plate;
- a step of disposing a second inter-plate conductive sheet between the second pultruded plate and the third pultruded plate;
wherein the step of disposing the third pultruded plate above the second pultruded plate is carried out partially disposing the third pultruded plate above the second pultruded plate; and
wherein the method further comprises a step of disposing in contact the at least one first inter-plate conductive sheet and the at least one second inter-plate conductive sheet with at least one conductive region of the first pultruded plate and the second pultruded plate respectively, in areas corresponding, in a first transversal direction of the wind turbine blade being perpendicular to the longitudinal direction, to an end area of the third pultruded plate.

Optionally, the method further comprises a step of at least partially disposing at least one additional inter-plate conductive sheet above the third pultruded plate; and a step of disposing in contact at least one additional inter-plate conductive sheet with the third pultruded plate in the end area of the third pultruded plate.

As one conductor (third pultruded plate) is added to an existing structure (first and second pultruded plates), it is carried out an electrical connection between the two existing conductors (first and second pultruded plates) and the new conductor (third pultruded plate). In case that this electrical connection is not done or not done properly, an "electric arc" will occur which can damage the structure. The described solution in the method of the present invention performs a proper electrical connection to avoid "electric arc" between the components.

This solution is based on connecting the pultruded plate with the existing pultruded plates, as the current density shall be balanced according to the individual cross-sections of all the conductors involved.

Current densities in the previously existing pultruded plates (first and second pultruded plates) need to be balanced since a new pultruded plate (third pultruded plate) is added. This is carried out in the in the region corresponding to the at least one end of the third pultruded plate in the longitudinal direction of the wind turbine blade, by means of the step of disposing in contact the at least one first inter-plate conductive sheet and the at least one second inter-plate conductive sheet with the at least one conductive region of the first pultruded plate and the second pultruded plate respectively, in areas corresponding, in a first transversal direction of the wind turbine blade being perpendicular to the longitudinal direction, to an end area of the third pultruded plate.

Preferably, the step of disposing, at least, the second pultruded plate above the first pultruded plate and the third pultruded plate above the second pultruded plate is carried out disposing at least partially the at least one first inter-plate conductive sheet and the at least one second inter-plate conductive sheet between the first pultruded plate and the second pultruded plate, and the second pultruded plate and the third pultruded plate, respectively, along a second transversal direction of the wind turbine blade being perpendicular to the longitudinal direction.

Optionally, the method further comprises a step of at least partially disposing the at least one additional inter-plate conductive sheet above any of the first pultruded plate, the second pultruded plate or both of them.

### BRIEF DESCRIPTION OF THE DRAWINGS

Figure 1 shows a spar cap of the system of the present invention.
Figure 2 shows a cross-section of a first embodiment of a pultruded plate of the at least one set of carbon pultruded plates of the electrical connection system for a wind turbine blade of the present invention.
Figure 3 shows a cross-section of a second embodiment of a pultruded plate of the at least one set of carbon pultruded plates of the electrical connection system for a wind turbine blade of the present invention.
Figure 4 shows a partial cross-section DD' of Figure 1 according to the pultruded plates shown in Figure 2.
Figure 5 shows a partial cross-section DD' of Figure 1 according to the pultruded plates shown in Figure 3.
Figure 6 shows a detail H of Figure 1, wherein the at least one additional inter-plate conductive sheet is at least partially disposed above the third pultruded plate and above the second pultruded plate and the third pultruded plate comprises a chamfered area disposed at least at one end of the third pultruded plate.
Figure 7 shows a detail H of Figure 1, wherein the at least one additional inter-plate conductive sheet is at least partially disposed above the third pultruded plate and above the second pultruded plate and the third pultruded plate comprises a planar area disposed at least at one end of the third pultruded plate.
Figures 8a to 8d show a partial cross-section EE' of Figure 7 according to the pultruded plates shown in Figure 2, wherein several embodiments of the at least one additional inter-plate conductive sheet, together with the first inter-plate conductive sheet and the second inter-plate conductive sheet are shown.
Figures 9a and 9b show a partial cross-section EE' of Figure 7 according to the pultruded plates shown in Figure 3, wherein several embodiments of the at least one additional inter-plate conductive sheet, together with the first inter-plate conductive sheet and the second inter-plate conductive sheet are shown.

### PREFERRED EMBODIMENT OF THE INVENTION

In a preferred embodiment of the invention, the electrical connection system for a wind turbine blade comprises:
- a spar cap assembly which in turn comprises:
   ∘ at least one set of carbon pultruded plates comprising at least, a first pultruded plate (1, 101), a second pultruded plate (2, 102) and a third pultruded plate (3, 103), the second pultruded plate (2, 102) being disposed above the first pultruded plate (1, 101) and the third pultruded plate (3, 103) being disposed above the second pultruded plate (2, 102), wherein each one of the first (1, 101), the second (2, 102) and the third (3, 103) pultruded plates comprises at least one electrically conductive region (22, 122, 21', 121'), wherein the first (1, 101), the second (2, 102) and the third (3, 103) pultruded plates define a longitudinal direction (8) of the wind turbine blade;
   ∘ at least one first inter-plate conductive sheet (11, 111) disposed between the first pultruded plate (1, 101) and the second pultruded plate (2, 102);at least one second inter-plate conductive sheet (12, 112) disposed between the second pultruded plate (2, 102) and the third pultruded plate (3, 103);
wherein the third pultruded plate (3, 103) is partially disposed above the second pultruded plate (2, 102) and comprises at least one end (28, 128) followed by an end area (27, 127, 29, 129) in the longitudinal direction (8) of the wind turbine blade; and
wherein the at least one first inter-plate conductive sheet (1, 101) and the at least one second inter-plate conductive sheet (2, 102) are disposed in contact with the at least one electrically conductive region (22, 122, 21', 121') of the first pultruded plate (1, 101), the second pultruded plate (2, 102) and the third pultruded plate (3, 103) respectively, in areas (27', 127', 29', 129') corresponding, in a first transversal direction (10) of the wind turbine blade being perpendicular to the longitudinal direction (8), to the end area (27, 127, 29, 129) of the third pultruded plate (3, 103).

Preferably, the spar cap assembly further comprises at least one additional inter-plate conductive sheet (17, 117) at least partially disposed above the third pultruded plate (3, 103) and the at least one additional inter-plate conductive sheet (17, 117) is disposed in contact with the at least one electrically conductive region (22, 122) of the third pultruded plate (3, 103) in the end area (27, 127, 29, 129) of the third pultruded plate (3, 103).

Optionally, the spar cap assembly comprises multiple parallel sets of carbon pultruded plates comprising each set at least, a first pultruded plate (1, 101), a second pultruded plate (2, 102) and a third pultruded plate (3, 103), the second pultruded plate (2, 102) being disposed above the first pultruded plate (1, 101) and the third pultruded plate (3, 103) being disposed above the second pultruded plate (2, 102), wherein each one of the first (1, 101), the second (2, 102) and the third (3, 103) pultruded plates comprises at least one electrically conductive region (22, 122, 21', 121'), wherein the first (1, 101), the second (2, 102) and the third (3, 103) pultruded plates define a longitudinal direction (8) of the wind turbine blade.

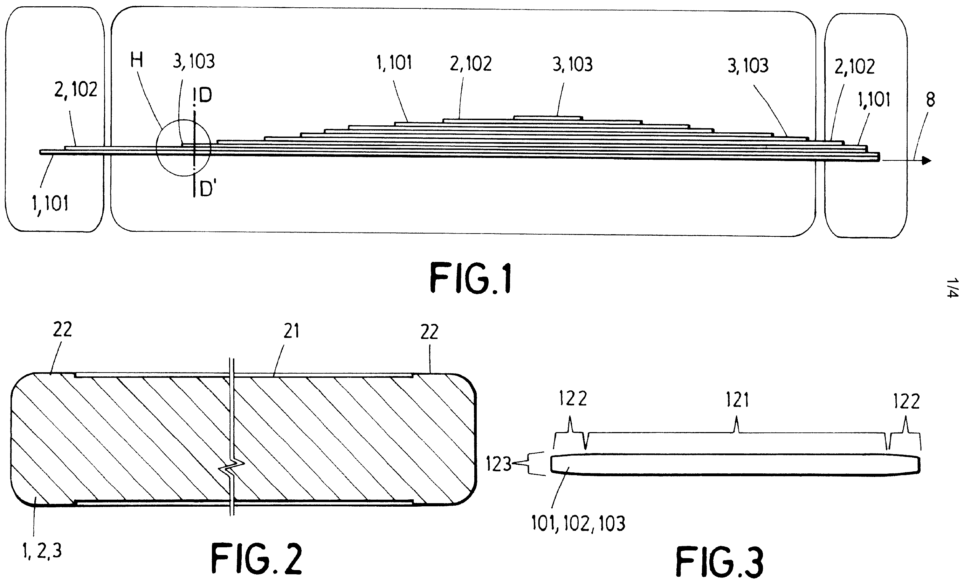

Figure 2 shows a cross-section of a first embodiment of a pultruded plate of the at least one set of carbon pultruded plates of the electrical connection system for a wind turbine blade of the present invention.

According to this first embodiment, the pultruded plates (1, 2, 3) comprise a central peel ply region (21) and two distal regions (22) adjacent to the central peel ply region, wherein the central peel ply region comprises a first thickness lower than a second thickness of the two distal regions. The two distal regions (22) are electrically conductive regions, whereas the central peel ply region (21) is a non-conductive region since once a peel-ply sheet is removed (produced during manufacturing preferably by protrusion), an insulation layer is obtained in the peel ply region (21), preferably about 150 µm depth.

The at least one first inter-plate conductive sheet (11) disposed between the first pultruded plate (1) and the second pultruded plate (2) and the at least second inter-plate conductive sheet (12) disposed between the second pultruded plate (2) and the third pultruded plate (3) for this first embodiment of pultruded plates (1, 2, 3) comprises a width larger than a width of the central peel ply region (21), assuring the contact between the inter-plate conductive sheet (11, 12) being disposed between the pultruded plates (1, 2, 3).

Figure 3 shows a cross-section of a second embodiment of a pultruded plate (101, 102, 103) of the at least one set of carbon pultruded plates of the electrical connection system for a wind turbine blade of the present invention.

According to this second embodiment, the pultruded plates (101, 102, 103) comprise a central peel ply region (121) and two distal regions (122) adjacent to the central peel ply region (121), wherein the central peel ply region (121) comprises a first thickness larger than a second thickness of the two distal regions (122), wherein the second thickness is decreasing from the central peel ply (121) region to a lateral side (123) of the pultrude plate (101, 102, 103). The two distal regions (122) are electrically conductive regions, whereas the central peel ply region (121) is a non-conductive region since a peel-ply sheet is removed (produced during manufacturing preferably by protrusion).

The at least one first inter-plate conductive sheet (111) disposed between the first pultruded plate (101) and the second pultruded plate (102) and the at least second inter-plate conductive sheet (112) disposed between the second pultruded plate (102) and the third pultruded plate (103) for this first embodiment of pultruded plates (101, 102, 103) comprises a width larger than a width of the central peel ply region (121), plus a width of at least one of the two distal regions (122), plus a width corresponding at least to twice the thickness of the pultruded plate (103, 102), assuring the contact between at least one first inter-plate conductive sheet (111) and the at least second inter-plate conductive sheet (112).

The at least one first inter-plate conductive sheet (11, 111) and the at least one second inter-plate conductive sheet (12, 121) are disposed at least partially between the first pultruded plate (1, 101) and the second pultruded plate (2, 102), and the second pultruded plate (2, 102) and the third pultruded plate (3, 103), respectively, along a second transversal direction (9) of the wind turbine blade being perpendicular to the longitudinal direction (8), for both embodiments of the pultruded plates (1, 2, 3, 101, 102, 103). Preferably, the at least one first inter-plate conductive sheet (11, 111) and the at least one second inter-plate conductive sheet (12, 121) are disposed along predetermined separated stretches of the longitudinal direction (8) of the blade, being preferably the length of each stretch of 200 mm and meeting the condition that one stretch is disposed at two end areas of the first pultruded plate (1, 101) and the second pultruded plate (2, 102) defined in the longitudinal direction (8) of the wind turbine blade.

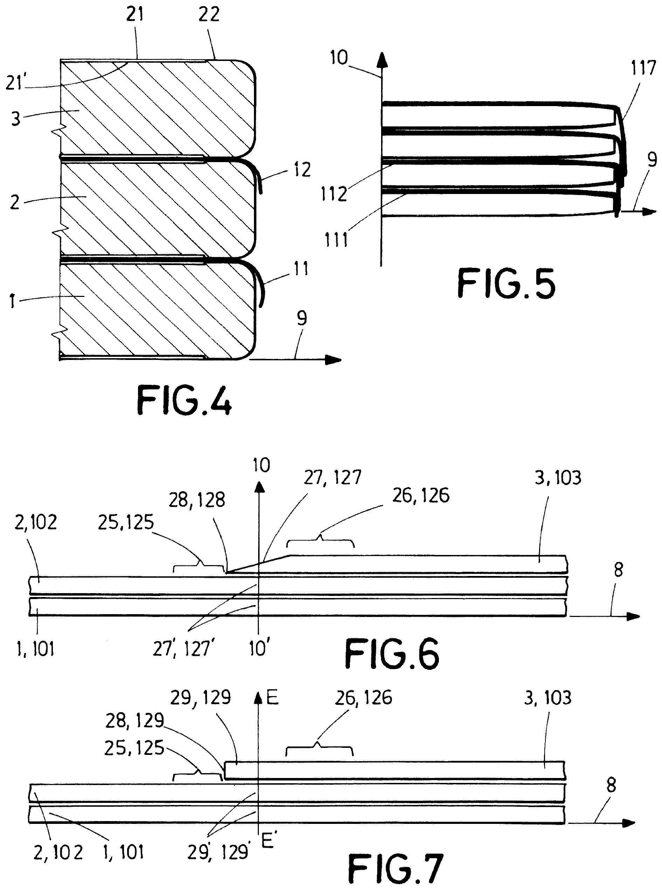

In a preferred embodiment shown in Figure 6, the end area of the third pultruded plate (3, 103) which follows the at least at one end (28, 128) is a chamfered area (27, 127).

Also, in another preferred embodiment shown in Figure 7, the end area of the third pultruded plate (3, 103) which follows the at least at one end (28, 128) is a planar area (29, 129). The planar area (29, 129) has been previously sanded to remove the resin attached during the pultrusion manufacturing process, i.e., configuring a sanded planar area (29, 129).

For both preferred embodiments of the third pultruded plate (3, 103) shown in Figures 6 and 7, the end area, being preferably the chamfered area (27, 127) or the sanded planar area (29, 129) comprises a length included in the interval [50 mm, 1000 mm], preferably included in the interval [100 mm, 500 mm].

For the embodiments shown in Figures 6 and 7, the at least one additional inter-plate conductive sheet (17, 117) is disposed above the chamfered area (27, 127) or the sanded planar area (29, 129) of the third pultruded plate (3, 103) and above a first area (26, 126) of the third pultruded plate (3, 103) adjacent to the chamfered area (27, 127) or the sanded planar area (29, 129). The at least one additional inter-plate conductive sheet (17, 117) is also at least partially disposed above a second area (25, 125) of the second pultruded plate (2, 102), for both embodiments of the pultruded plates (1, 2, 3, 101, 102, 103), adjacent to the chamfered area (27, 127) or the sanded planar area (29, 129). The first area (26, 126) of the third pultruded plate (3, 103) adjacent to the chamfered area (27, 127) or the sanded planar area (29, 129) and the second area (25, 125) of the second pultruded plate (2, 102), for both embodiments of the pultruded plates (1, 2, 3, 101, 102, 103), adjacent to the chamfered area (27, 127) comprise a length included in the interval [0 mm, 1000 mm], preferably included in the interval [100 mm, 500 mm].

In this way, an electrical connection between the first pultruded plate (1, 101), the second pultruded plate (2, 102) and the third pultruded plate (3, 103) is established, avoiding an electric arc between them which can damage the spar cap assembly and in consequence the electrical connection system for a wind turbine blade.

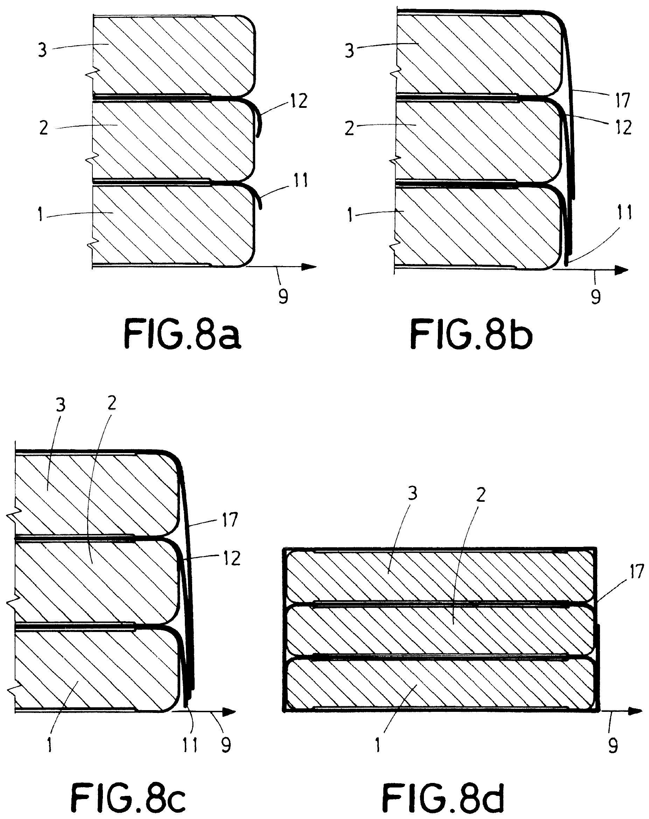

Figures 8a to 8d show a partial cross-section EE' of Figure 7 according to the pultruded plates shown in Figure 2, wherein several embodiments of the at least one additional inter-plate conductive sheet (17) only for the embodiments of Figures 8b to 8d, together with the first inter-plate conductive sheet (11) and the second inter-plate conductive sheet (12) and their respective pultruded plates are shown.

In Figure 8a, there is no physical contact between the first inter-plate conductive sheet (11) and the second inter-plate conductive sheet (12), since the first inter-plate conductive sheet (11) and the second inter-plate conductive sheet (12) comprise a width substantially equal to the width of the central peel ply region (21), plus a width of at least one of the two distal regions (22).

In Figure 8b, there is physical contact between the first inter-plate conductive sheet (11) and the second inter-plate conductive sheet (12) and between the second inter-plate conductive sheet (12) and at least one additional inter-plate conductive sheet (17), since the second inter-plate conductive sheet (12) and the at least one additional inter-plate conductive sheet (17) comprise a width substantially equal to the width of the central peel ply region (21), plus a width of at least one of the two distal regions (22), plus a width corresponding at least to twice the thickness of the pultruded plate (3, 2), and the first inter-plate conductive sheet (11) comprises a width substantially equal to the width of the central peel ply region (21), plus a width of at least one of the two distal regions (22), plus a width corresponding at least to the thickness of the first pultruded plate (1). Thus, an inter-plate conductive sheet overlaps the inter-plate conductive sheet disposed below it.

In Figure 8c, there is physical contact between the first inter-plate conductive sheet (11) and the second inter-plate conductive sheet (12) and between the second inter-plate conductive sheet (12) and the at least one additional inter-plate conductive sheet (17), since the first inter-plate conductive sheet (11) comprises a width substantially equal to the width of the central peel ply region (21), plus a width of at least one of the two distal regions (22), plus a width corresponding at least to the thickness of the first pultruded plate (1), the second inter-plate conductive sheet (12) comprises a width substantially equal to the width of the central peel ply region (21), plus a width of at least one of the two distal regions (22), plus a width corresponding at least to twice the thickness of the pultruded plate (2, 1), and the at least one additional inter-plate conductive sheet (17) comprises a width substantially equal to the width of the central peel ply region (21), plus a width of at least one of the two distal regions (22), plus a width corresponding at least to three times the thickness of the pultruded plate (3, 2, 1). Thus, an inter-plate conductive sheet overlaps all the inter-plate conductive sheets disposed below it.

In Figure 8d, there is physical contact between the first inter-plate conductive sheet (11) and the second inter-plate conductive sheet (12), between the second inter-plate conductive sheet (12) and the at least one additional inter-plate conductive sheet (17), since the first inter-plate conductive sheet (11) comprises a width substantially equal to the width of the central peel ply region (21), plus a width of at least one of the two distal regions (22), plus a width corresponding at least to the thickness of the first pultruded plate (1), the second inter-plate conductive sheet (12) comprises a width substantially equal to the width of the central peel ply region (21), plus a width of at least one of the two distal regions (22), plus a width corresponding at least to twice the thickness of the pultruded plate (2, 1), and the at least one additional inter-plate conductive sheet (17) wraps the first inter-plate conductive sheet (11), the second inter-plate conductive sheet (12) and the at least one additional inter-plate conductive sheet (17) and comprises a width substantially equal to twice the width of the central peel ply region (21), plus a width corresponding at least to four time one of the distal regions (22), plus a width corresponding at least to six times the thickness of the pultruded plate (3, 2, 1).

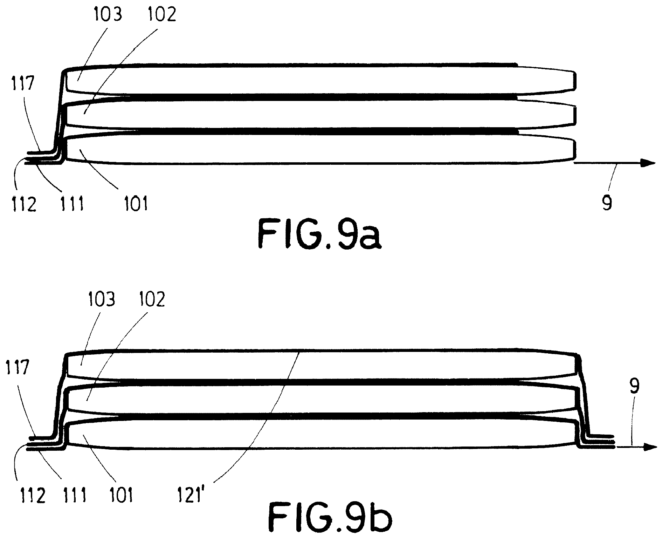

Figures 9a and 9b show a partial cross-section EE' of Figure 7 according to the pultruded plates shown in Figure 3, wherein several embodiments of the at least one additional inter-plate conductive sheet (117), together with the first inter-plate conductive sheet (111) and the second inter-plate conductive sheet (112) are shown.

In Figure 9a, there is physical contact between the first inter-plate conductive sheet (111) and the second inter-plate conductive sheet (112), and between the second inter-plate conductive sheet (112) and the at least one additional inter-plate conductive sheet (117), since the first inter-plate conductive sheet (111) comprises a width substantially equal to the width of the central peel ply region (121), plus a width of at least one of the two distal regions (122), plus a width corresponding at least to the thickness of the first pultruded plate (11), the second inter-plate conductive sheet (112) comprises a width substantially equal to the width of the central peel ply region (21), plus a width of at least one of the two distal regions (122), plus a width corresponding at least to twice the thickness of the pultruded plate (102, 101), and the at least one additional inter-plate conductive sheet (117) comprises a width substantially equal to the width of the central peel ply region (121), plus a width of at least one of the two distal regions (122), plus a width corresponding at least to three times the thickness of the pultruded plate (103, 102, 101). Thus, an inter-plate conductive sheet overlaps all the inter-plate conductive sheets disposed below it at one a lateral side (123) of the pultrude plates.

In Figure 9b, there is physical contact between the first inter-plate conductive sheet (111) and the second inter-plate conductive sheet (112), and between the second inter-plate conductive sheet (112) and the at least one additional inter-plate conductive sheet (117), since the first inter-plate conductive sheet (111) comprises a width substantially equal to the width of the central peel ply region (121), plus a width of at least two of the two distal regions (122), plus a width corresponding at least to twice the thickness of the first pultruded plate (11), the second inter-plate conductive sheet (112) comprises a width substantially equal to the width of the central peel ply region (21), plus a width of at least two of the two distal regions (122), plus a width corresponding at least to four times the thickness of the pultruded plate (102, 101), and the at least one additional inter-plate conductive sheet (117) comprises a width substantially equal to the width of the central peel ply region (121), plus a width of at least two of the two distal regions (122), plus a width corresponding at least to six times the thickness of the pultruded plate (103, 102, 101). Thus, an inter-plate conductive sheet overlaps all the inter-plate conductive sheets disposed below it at both lateral sides (123) of the pultruded plates.

Another variant of the embodiments of Figures 8a to 8d, 9a and 9b, is included hereby by reference, wherein an additional carbon pultruded plate (7, 107) is disposed below the first pultruded plate (1, 101).

The invention also relates to a method for electrically connecting conductive caps in a wind turbine blade which comprises:
- a step of disposing, at least, a second pultruded plate (2, 102) above a first pultruded plate (1, 101) and a third pultruded plate (3, 103) above the second pultruded plate (2, 102), wherein the first (1, 101), the second (2, 102) and the third pultruded plates (3, 103) define a longitudinal direction (8) of the wind turbine blade;
- a step of disposing at least one first inter-plate conductive sheet (11, 111) between the first pultruded plate (1, 101) and the second pultruded plate (2, 102); and
- a step of disposing a second inter-plate conductive sheet (12, 112) between the second pultruded plate (2, 102) and the third pultruded plate (3, 103).
wherein the step of disposing the third pultruded plate (3, 103) above the second pultruded plate (2, 102) is carried out partially disposing the third pultruded plate (3, 103) above the second pultruded plate (2, 102); and
wherein the method further comprises a step of disposing in contact the at least one first inter-plate conductive sheet (11, 111) and the at least one second inter-plate conductive sheet (12, 112) with at least one conductive region (22, 122) of the first pultruded plate (1, 101) and the second pultruded plate (2, 102) respectively, in areas (27', 127', 29', 129') corresponding, in a first transversal direction (10) of the wind turbine blade being perpendicular to the longitudinal direction (8), to an end area (27, 127, 29, 129) of the third pultruded plate (3, 103).

Preferably, the method further comprises a step of at least partially disposing at least one additional inter-plate conductive sheet (17, 117) above the third pultruded plate (3, 103) and a step of disposing in contact the at least one additional inter-plate conductive sheet (17, 117) with the third pultruded plate (3, 103) in the end area (27, 127, 29, 129) of the third pultruded plate (3, 103).

Preferably, the step of disposing, at least, the second pultruded plate (2, 102) above the first pultruded plate (1, 101) and the third pultruded plate (3, 103) above the second pultruded plate (2, 102) is carried out disposing at least partially the at least one first inter-plate conductive sheet (11, 111) and the at least one second inter-plate conductive sheet (12, 112) between the first pultruded plate (1, 101) and the second pultruded plate (2, 102), and the second pultruded plate (2, 102) and the third pultruded plate (3, 103), respectively, along a second transversal direction (9) of the wind turbine blade being perpendicular to the longitudinal direction (8). Most preferably, the step of disposing, at least, the second pultruded plate (2, 102) above the first pultruded plate (1, 101) and the third pultruded plate (3, 103) above the second pultruded plate (2, 102) is carried out disposing the at least one first inter-plate conductive sheet (11, 111) and the at least one second inter-plate conductive sheet (12, 121) along predetermined separated stretches of the longitudinal direction (8) of the blade, being preferably the length of each stretch of 200 mm and meeting the condition that one stretch is disposed at two end areas of the first pultruded plate (1, 101) and the second pultruded plate (2, 102) defined in the longitudinal direction (8) of the wind turbine blade.

Preferably, the step of at least partially disposing the at least one additional inter-plate conductive sheet (17, 117) above the third pultruded plate (3, 103) is carried out disposing the additional inter-plate conductive sheet (17, 117) above the end area (27, 127, 29, 129) of the third pultruded plate (3, 103), being a chamfered area (27, 127) or a sanded planar area (29, 129) and above a first area (26, 126) of the third pultruded plate (3, 103) adjacent to the end area (27, 127, 29, 129) and at least partially disposing the at least one additional inter-plate conductive sheet (17, 117) above a second area (25, 125) of the second pultruded plate (2, 102), adjacent to the end area (27, 127, 29, 129).

## Claims

1. Electrical connection system for a wind turbine blade which comprises:
∘ at least one set of carbon pultruded plates comprising at least, a first pultruded plate (1, 101), a second pultruded plate (2, 102) and a third pultruded plate (3, 103), the second pultruded plate (2, 102) being disposed above the first pultruded plate (1, 101) and the third pultruded plate (3, 103) being disposed above the second pultruded plate (2, 102), wherein each one of the first (1, 101), the second (2, 102) and the third (3, 103) pultruded plates comprises at least one electrically conductive region (22, 122, 21', 121'), wherein the first (1, 101), the second (2, 102) and the third (3, 103) pultruded plates define a longitudinal direction (8) of the wind turbine blade;
∘ at least one first inter-plate conductive sheet (11, 111) disposed between the first pultruded plate (1, 101) and the second pultruded plate (2, 102);at least one second inter-plate conductive sheet (12, 112) disposed between the second pultruded plate (2, 102) and the third pultruded plate (3, 103);
wherein the third pultruded plate (3, 103) is partially disposed above the second pultruded plate (2, 102) and comprises at least one end (28, 128) followed by an end area (27, 127, 29, 129) in the longitudinal direction (8) of the wind turbine blade; and
wherein the at least one first inter-plate conductive sheet (1, 101) and the at least one second inter-plate conductive sheet (2, 102) are disposed in contact with the at least one electrically conductive region (22, 122, 21', 121') of the first pultruded plate (1, 101), the second pultruded plate (2, 102) and the third pultruded plate (3, 103) respectively, in areas (27', 127', 29', 129') corresponding, in a first transversal direction (10) of the wind turbine blade being perpendicular to the longitudinal direction (8), to the end area (27, 127, 29, 129) of the third pultruded plate (3, 103).

2. Electrical connection system for a wind turbine blade according to claim 1 further comprising at least one additional inter-plate conductive sheet (17, 117) at least partially disposed above the third pultruded plate (3, 103) wherein the at least one additional inter-plate conductive sheet (17, 117) is disposed in contact with the at least one electrically conductive region (22, 122) of the third pultruded plate (3, 103) in the end area (27, 127, 29, 129) of the third pultruded plate (3, 103).

3. Electrical connection system for a wind turbine blade according to any one of claims 1 or 2 wherein the pultruded plates (1, 101, 2, 102, 3, 103) comprise a central peel ply region (21, 121) and two distal regions (22, 122) adjacent to the central peel ply region (21, 121), wherein the two distal regions (22, 122) are electrically conductive regions.

4. Electrical connection system for a wind turbine blade according to any one of claims 1 or 2 wherein the pultruded plates (1, 101, 2, 102, 3, 103) comprise a central peel ply region (21', 121') and two distal regions (22, 122) adjacent to the central peel ply region (21', 121'), wherein the central peel ply region (21', 121') and the two distal regions (22, 122) are electrically conductive regions, wherein the central peel ply region (21', 121') is a sanded central peel ply region.

5. Electrical connection system for a wind turbine blade according to any one of the previous claims wherein the at least one first inter-plate conductive sheet (11, 111) and the at least one second inter-plate conductive sheet (12, 121) are disposed at least partially between the first pultruded plate (1, 101) and the second pultruded plate (2, 102), and the second pultruded plate (2, 102) and the third pultruded plate (3, 103), respectively, along a second transversal direction (9) of the wind turbine blade being perpendicular to the longitudinal direction (8).

6. Electrical connection system for a wind turbine blade according to claim 2 wherein the at least one additional inter-plate conductive sheet (17, 117) is also at least partially disposed above any of the first pultruded plate (1, 101), the second pultruded plate (2, 102) or both of them (1, 101, 2, 102).

7. Electrical connection system for a wind turbine blade according to any one of the previous claims wherein the end area (27, 127) of the third pultruded plate (3, 103) which follows the at least at one end (28, 128) is a chamfered area.

8. Electrical connection system for a wind turbine blade according to any one of claims 1 to 6 wherein the end area (29, 129) of the third pultruded plate (3, 103) which follows the at least at one end (28, 128) is a sanded planar area (29, 129).

9. Electrical connection system for a wind turbine blade according to any one of claims 7 or 8 wherein the end area (27, 127, 29, 129) comprises a length included in the interval [50 mm, 1000 mm], preferably included in the interval [100 mm, 500 mm].

10. Wind turbine comprising at least a wind turbine blade comprising the electrical bonding system according to any one of the preceding claims.

11. Method for electrically connecting conductive caps in a wind turbine blade which comprises:
• a step of disposing, at least, a second pultruded plate (2, 102) above a first pultruded plate (1, 101) and a third pultruded plate (3, 103) above the second pultruded plate (2, 102), wherein the first (1, 101), the second (2, 102) and the third pultruded plates (3, 103) define a longitudinal direction (8) of the wind turbine blade;
• a step of disposing at least one first inter-plate conductive sheet (11, 111) between the first pultruded plate (1, 101) and the second pultruded plate (2, 102); and
• a step of disposing a second inter-plate conductive sheet (12, 112) between the second pultruded plate (2, 102) and the third pultruded plate (3, 103).
wherein the step of disposing the third pultruded plate (3, 103) above the second pultruded plate (2, 102) is carried out partially disposing the third pultruded plate (3, 103) above the second pultruded plate (2, 102); and
wherein the method further comprises a step of disposing in contact the at least one first inter-plate conductive sheet (11, 111) and the at least one second inter-plate conductive sheet (12, 112) with at least one conductive region (22, 122) of the first pultruded plate (1, 101) and the second pultruded plate (2, 102) respectively, in areas (27', 127', 29', 129') corresponding, in a first transversal direction (10) of the wind turbine blade being perpendicular to the longitudinal direction (8), to an end area (27, 127, 29, 129) of the third pultruded plate (3, 103).

12. Method for electrically connecting conductive caps in a wind turbine blade according to claim 11 further comprising a step of at least partially disposing at least one additional inter-plate conductive sheet (17, 117) above the third pultruded plate (3, 103) and a step of disposing in contact the at least one additional inter-plate conductive sheet (17, 117) with the third pultruded plate (3, 103) in the end area (27, 127, 29, 129) of the third pultruded plate (3, 103).

13. Method for electrically connecting conductive caps in a wind turbine blade according to any one of claims 11 or 12 wherein the step of disposing, at least, the second pultruded plate (2, 102) above the first pultruded plate (1, 101) and the third pultruded plate (3, 103) above the second pultruded plate (2, 102) is carried out disposing at least partially the at least one first inter-plate conductive sheet (11, 111) and the at least one second inter-plate conductive sheet (12, 112) between the first pultruded plate (1, 101) and the second pultruded plate (2, 102), and the second pultruded plate (2, 102) and the third pultruded plate (3, 103), respectively, along a second transversal direction (9) of the wind turbine blade being perpendicular to the longitudinal direction (8).

14. Method for electrically connecting conductive caps in a wind turbine blade according to claim 13 wherein the step of disposing, at least, the second pultruded plate (2, 102) above the first pultruded plate (1, 101) and the third pultruded plate (3, 103) above the second pultruded plate (2, 102) is carried out disposing the at least one first inter-plate conductive sheet (11, 111) and the at least one second inter-plate conductive sheet (12, 121) along predetermined separated stretches of the longitudinal direction (8) of the blade, being preferably the length of each stretch of 200 mm and meeting the condition that one stretch is disposed at two end areas of the first pultruded plate (1, 101) and the second pultruded plate (2, 102) defined in the longitudinal direction (8) of the wind turbine blade.

15. Method for electrically connecting conductive caps in a wind turbine blade according to claim 12 wherein the step of at least partially disposing the at least one additional inter-plate conductive sheet (17, 117) above the third pultruded plate (3, 103) is carried out disposing the additional inter-plate conductive sheet (17, 117) above the end area (27, 127, 29, 129) of the third pultruded plate (3, 103), being a chamfered area (27, 127) or a sanded planar area (29, 129) and above a first area (26, 126) of the third pultruded plate (3, 103) adjacent to the end area (27, 127, 29, 129) and at least partially disposing the at least one additional inter-plate conductive sheet (17, 117) above a second area (25, 125) of the second pultruded plate (2, 102), adjacent to the end area (27, 127, 29, 129).
